# EUROPÄISCHE PATENTSCHRIFT

(11) **EP 0 612 136 B1**
(45) Veröffentlichungstag und Bekanntmachung des Hinweises auf die Patenterteilung: **14.08.1996**
(21) Anmeldenummer: 93102672.8
(22) Anmeldetag: 19.02.1993
(51) Int. Cl.: H02K 5/14, H01R 39/38

(54) **Bürstenhalteranordnung für einen Kommutatormotor**
Brush holder assembly for a commutator motor
Dispositif porte-balais pour un moteur à commutateur

(43) Veröffentlichungstag der Anmeldung: 24.08.1994
(73) Patentinhaber: SIEMENS AKTIENGESELLSCHAFT, 80333 München (DE)
(72) Erfinder: Fiedler, Rudolf, Dipl.-Ing., W-6990 Bad Mergentheim (DE); Zaps, Klaus, W-8712 Astheim (DE)

(56) Entgegenhaltungen:
- EP-A- 0 105 392
- WO-A-91/03857
- DE-A- 2 055 610
- DE-A- 2 461 390
- DE-C- 836 970

## Beschreibung

Die Erfindung bezieht sich auf eine Bürstenhalteranordnung für einen Kommutatormotor gemäß Anspruch 1.

Eine Bürstenhalterung mit den Merkmalen a-c des Anspruchs 1 ist durch die DE-A-24 61 390 bekannt. Zur axialen Fixierung der Bürsten und Bürstenandruckfedern in Gegenmontagerichtung ist im vorngenannten bekannten Fall eine Bürstenstützscheibe als gesondertes Bauteil in einem Schulterabschnitt des Motorgehäuses durch Andruck eines, u.a. auch die Bürsten aufnehmenden, Stirndeckels festgehalten.

Durch die DE-B2-20 55 610 ist eine Bürstenhalteranordnung einer elektrischen Maschine bekannt, bei der Hebelbürsten auf jeweils einem gehäusefesten, mit einer Anschlagschulter versehenen Zapfen, sich axial an dieser abstützend, radial schwenkbar angeordnet und durch eine um den Zapfen gewickelte Torsionsschraubenfeder sowohl in axialer Richtung auf dem Zapfen gehalten als auch gegen den Kommutator gedrückt sind, wobei die Torsionsschraubenfeder einerseits am Gehäuse gehalten ist und andererseits mit einem U-förmig ausgebildeten Ende an der Hebelbürste anliegt.

Durch die EP-B1-0 105 392 ist eine Bürstenhalterung mit an einer Bürstentragplatte jeweils mit ihrer Rückseite gehalterten Bürstenkästen bekannt, die ein U-förmiges, zur Vorderseite axial zunächst geöffnetes und nach dem Einlegen einer Bürste durch einen Abschlußdeckel axial verschließbare Profile aufweisen und bei dem als Andruckfeder vorgesehene Schenkelfedern axial auf das freie Ende eines an der Bürstentragplatte befestigten, axial vorstehenden Zapfens bis zur radialen Auflage ihres Andruckschenkels auf der Stirnfläche der Kohlebürste aufsteckbar sind.

Durch die DE-AS-12 45 482 ist ferner ein Bürstenhalter mit kreisbogenförmig gekrümmten Hebelbürsten bekannt, um bei stark beanspruchten elektrischen Maschinen auf beschränktem Raum eine große Bürstenlänge unterbringen zu können.

Gemäß Aufgabe vorliegender Erfindung soll eine einfach herstellbare und montierbare und trotzdem betriebssichere sowie bei kompakter Bauform lange Betriebsstandzeiten gewährleistende Bürstenhalterung mit in einem Bürstenkasten unabhängig von der Drehrichtung des Kommutators in stabiler Lage anstellbaren Bürsten geschaffen werden; die Lösung dieser Aufgabe gelingt durch eine Bürstenhalteranordnung gemäß der Lehre des Anspruchs 1; vorteilhafte Ausgestaltungen der Erfindung sind jeweils Gegenstand der Unteransprüche.

Bei der erfindungsgemäßen Bürstenhalteranordnung lassen sich die Bürsten in einfacher axialer Steckmontage in die axial offenen Bürstenkästen einlegen und ohne Verschließen der Bürstenkästen durch einen gesonderten Bürstenkastendeckel durch eine ebenfalls in gleicher axialer Steckrichtung montierbare Bürstenandruckfeder sowohl zur offenen Seite des Bürstenkasten durch entsprechendes Anliegen des freien Schenkels der Schenkelfedern sichern als auch derart schräg im Bürstenkasten anstellen, daß unabhängig von der Drehrichtung des Kommutators und der damit an der Berührungsfläche zu der Bürste wirkenden tangentialen Reibungskräften die Bürste relativ zum Bürstenkasten lagestabil bleibt, wobei die Bürstenandruckfedern durch das Hinterschnappen hinter die Fixierungslaschen in einem Montagearbeitsgang gleichzeitig in Gegenmontagerichtung fixierbar sind.

Zur Verlängerung der Bürstenstandzeiten ist in vorteilhafter Weise vorgesehen, daß die Bürstenkästen bzw. die Bürsten im Sinne einer vergrößerten Bürstenlänge in Andruckrichtung gekrümmt sind bzw. die Bürsten in ihrem radial dem Kommutator abgewandten Endbereich einen stufenförmigen, die freien Andruckschenkel der Bürstenandruckfedern aufnehmenden Absatz mit einer tangentialen Bürstenandruckfläche und einer radialen Bürstenfixierungsfläche derart aufweisen, daß einerseits der Andruckschenkel nicht radial außen auf der Bürste unter Inanspruchnahme eines zusätzlichen Einbauraums aufliegt bzw. nicht mehr Bürstenlänge zur Auflage benötigt, als für eine Sicherheitsrestlänge bzw. zur Kontaktierung einer elektrischen Zuleitung notwendig ist, die vorteilhafter Weise im Bereich der Restlänge der Bürstenandruckfeder oberhalb des Absatzes erfolgt.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:
- FIG 1: die axiale stirnseitige Draufsicht auf eine erfindungsgemäße Bürstenhalteranordnung;
- FIG 2: die Bürstenhalterung gemäß FIG 1 in perspektivischer Explosionsdarstellung;

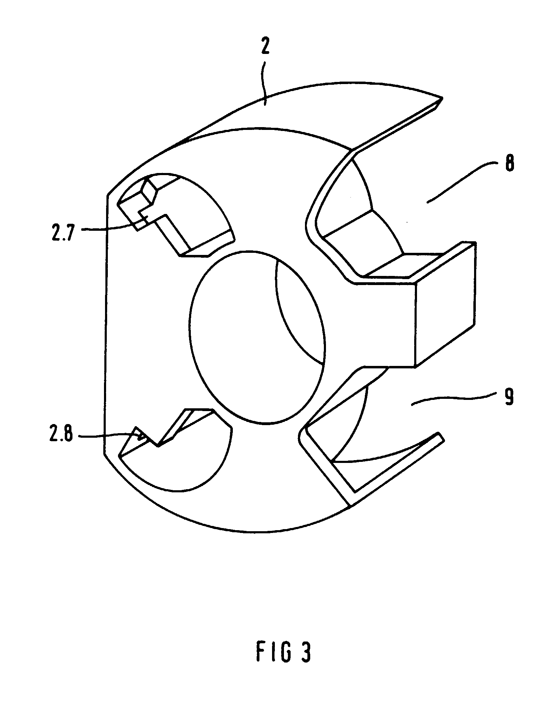

- FIG 3: die Bürstenhalterung gemäß FIG 2 in axial rückseitiger stirnseitiger Draufsicht.

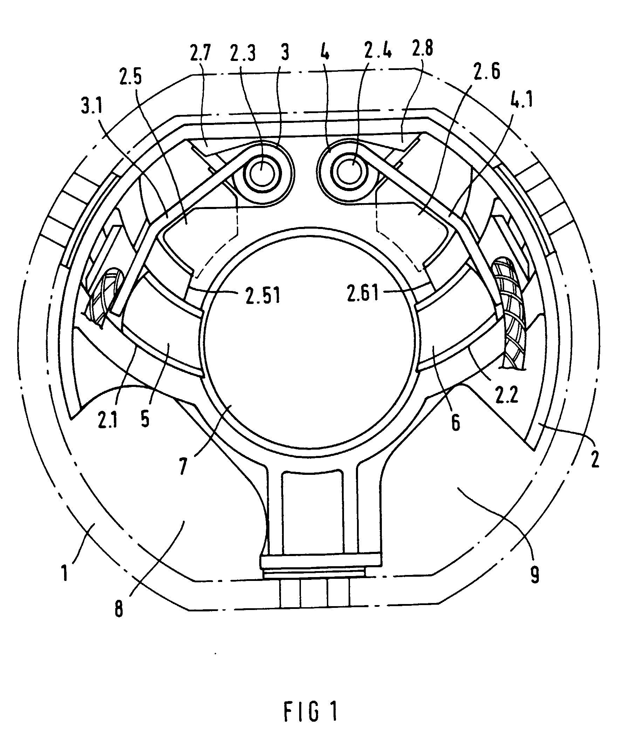

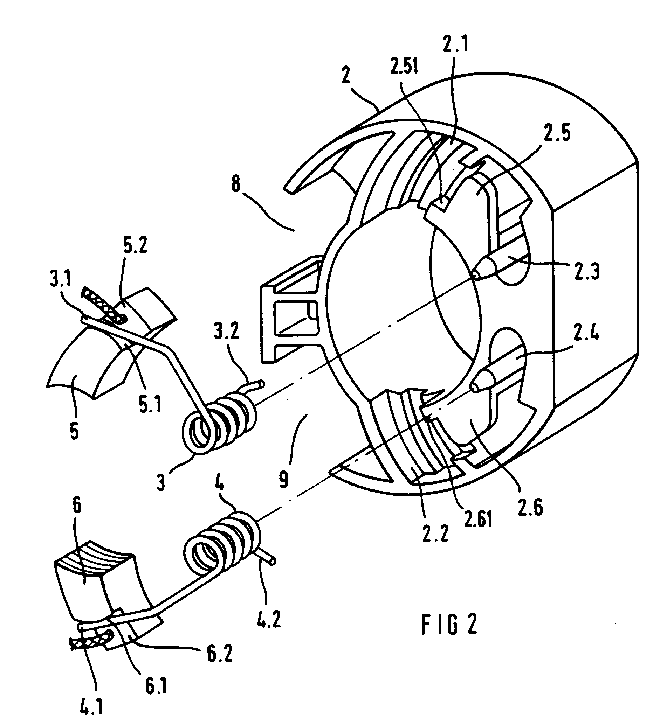

FIG 1 zeigt die in einem Gehäuse 1 eines Kommutatormotors axial eingesteckte Bürstenhalteranordnung mit einer einstückigen, nur mit in axialer Richtung ziehbaren Formteilen gespritzten Bürstenplatte 2. In diese Bürstenplatte 2 sind gemäß FIG 2 nach axial vorn offene Bürstenkästen 2.1; 2.2 eingespritzt, in die in axialer Einsteckmontage Bürsten 5;6 einlegbar sind. An die Bürstenplatte 2 sind weiterhin einstückig axial vorstehende stiftförmige Bürstenandruckfeder-Aufnahmen 2.3;2.4 angeformt, auf die Bürstenandruckfedern 3;4 in Form von Schenkelfedern mit einer gewendelten Ösenöffnung derart aufsteckbar sind, daß sie bei betriebsmäßiger Endlage mit ihren vorderen freien Andruckschenkeln 3.1;4.1 auf stufenförmigen Absätzen 5.1;6.1 der Bürsten 5;6 aufliegen und andererseits mit rückseitigen freien Abstützschenkeln 3.2;4.2 im Sinne einer axialen Lagesicherung, insbesondere Verdrehsicherung, bei Erreichen ihrer Aufsteckmontageendstellung in radial vorstehende Fixierungsnasen 2.7;2.8 einsteckbar sind, die in vorteilhafter Weise auf der Rückseite der Bürstenplatte 2 angeformt sind.

Die Bürstenplatte 2 ist an ihrer Vorderseite mit zumindest jeweils einer radial vorstehenden Fixierungslasche 2.5;2.6 versehen, deren freies, radial nach außen vorstehendes Ende bei der Aufsteckmontage einer Bürstenandruckfeder 3;4 auf die stiftförmigen Bürstenandruckfeder-Aufnahmen 2.3;2.4 von den Andruckschenkeln 3.1;4.1 der Bürstenandruckfedern 3;4 in einer radialen Montagestellung derart übergreifbar ist, daß die Andruckschenkel 3.1;4.1 anschließend betriebsmäßig im Sinne einer axialen Anschlagsicherung in Gegenmontagerichtung an den Fixierungslaschen (2.5;2.6) zur Anlage kommen.

Nach einer vorteilhaften Ausgestaltung der Erfindung weisen die Bürsten 5;6 an ihren radial dem Kommutator 7 abgewandten Endbereichen einen stufenförmigen, die freien Andruckschenkel 3.1;4.1 der Bürstenandruckfedern 3;4 aufnehmenden Absatz mit einer tangentialen Bürstenandruckfläche 5.1;6.1 und einer radialen Bürstenfixierungsfläche 5.2;6.2 auf, wobei zur Erzielung einer von der Drehrichtung des Kommutators 7 unabhängigen stabilen Anstellung der Bürsten 5;6 in ihren mit geringem Spiel tangential umgreifenden Bürstenkästen 2.1;2.2 zwischen der Bürstenandruckfläche 5.1;6.1 einerseits und dem auf dieser aufliegenden freien Andruckschenkel 3.1;4.1 andererseits jeweils eine vorzugsweise durch entsprechende Flächenkrümmung der Bürstenandruckfläche punktförmige Andruckkraftübertragung exzentrisch zur Bürstensymmetrie-Längsrichtung innerhalb ihrer Spielführung in den Bürstenkästen 2.1;2.2 gewährleistet ist; diese stabile Anstellung der Bürsten 5;6 innerhalb ihrer Bürstenkästen 2.1;2.2 wird durch die Gestaltung der Flächenkrümmung der Bürstenandruckfläche 5.1;6.1 über die gesamte Betriebszeit der schräg zur Kommutatoroberfläche gestellten Bürsten 5.6, d.h. unabhängig von ihrer durch Abnutzung sich verkürzenden Länge, gewährleistet.

Um eine Beschädigung des Kommutators 7 durch eine Berührung mit den freien Andruckschenkeln 3.1;4.1 der Bürstenandruckfedern 3;4 zu verhindern, sind in vorteilhafter Weise an die Bürstenplatte 2 zumindest jeweils ein radial gegen die freien Andruckschenkel 3.1;4.1 vorstehende Anschlagzunge 2.51;2.61 angespritzt, gegen die jeweils ein freier Andruckschenkel 3.1;4.1 vor einer Berührungsstellung mit dem Kommutator 7 bewegungshemmend anschlägt. Auf der den Bürstenandruckfeder-Aufnahmen 2.3;2.4 gegenüberliegenden Seite der Bürstenplatte 2 sind in vorteilhafter Ausnutzung des zur Verfügung stehenden Einbauraums Entstördrossel-Aufnahmetaschen 8 bzw. Thermowächter-Aufnahmetaschen 9 miteingespritzt.

In herstellungstechnisch und montagetechnisch günstiger Weise sind die Bürstenplatte 2 bzw. die Bürstenkästen 2.1;2.2 bzw. die stiftförmigen Bürstenandruckfeder-Aufnahmen 2.3;2.4 bzw. die Fixierungslaschen 2.5;2.6 bzw. Fixierungsnasen 2.7;2.8 bzw. die Anschlagzungen 2.51;2.61 bzw. die Entstördrossel-Aufnahmetaschen 8 bzw. die Thermowächter-Aufnahmetaschen 9 Teile eines, insbesondere nur mit axial ziehbaren Formwerkzeugen herstellbaren, Kunststoff-Spritzgußteils.

## Patentansprüche

1. Bürstenhalteranordnung für einen Kommutatormotor mit den Merkmalen:
a) Eine Bürstenplatte (2) ist mit, im Sinne einer axialen Bürsten-Einsteckmontage, zu einer axialen Stirnseite offenen Bürstenkästen (2.1;2.2) versehen;
b) die Bürstenplatte (2) ist mit, im Sinne einer gleichsinnigen axialen Bürstenandruckfeder-Aufsteckmontagehalterung, axial vorstehenden Bürstenandruckfeder-Aufnahmen (2.3;2.4) versehen;
c) als Bürstenandruckfedern (3;4) liegen Schenkelfedern betriebsmäßig jeweils mit einem freien Andruckschenkel (3.1;4.1) im Sinne eines auf den Kommutator (7) in schrägem Winkel gerichteten Andrucks radial auf den Bürsten (5;6) an;
d) die Bürstenplatte (2) ist mit zumindest jeweils einer radial vorstehenden Fixierungslasche (2.5;2.6) versehen, deren freies Ende bei der Montage einer Bürstenandruckfeder (3;4) von deren Andruckschenkel (3.1;4.1) derart übergreifbar ist, daß dieser betriebsmäßig im Sinne einer axialen Anschlagsicherung in Gegenmontagerichtung an der Fixierungslasche (2.5;2.6) zur Anlage kommt.

2. Bürstenhalteranordnung nach Anspruch 1 mit dem Merkmal:
f) Die Bürstenplatte (2) ist mit zumindest jeweils einer radial vorstehenden Fixierungsnase (2.7;2.8) versehen, hinter der die Bürstenandruckfedern (3;4) im Sinne einer axialen Lagesicherung bzw. Verdrehsicherung bei Erreichen ihrer Aufsteckmontageendstellung jeweils mit einem freien Abstützschenkel (3.2;4.2) einsteckbar ist.

3. Bürstenhalteranordnung nach zumindest, einem der Ansprüche 1 bzw. 2 mit dem Merkmal:
g) die Bürstenplatte (2) ist mit zumindest jeweils einer radial vorstehenden Anschlagzunge (2.51;2.61) versehen, gegen die jeweils ein freier Andruckschenkel (3.1;4.1) vor einer Berührungsstellung mit dem Kommutator (7) bewegungshemmend anschlägt.

4. Bürstenhalteranordnung nach zumindest einem der Ansprüche 1-3 mit dem Merkmal:
h) Die Bürsten (5;6) weisen in ihrem radial dem Kommutator (7) abgewandten Endbereich einen stufenförmigen, die freien Andruckschenkel (3.1;4.1) der Bürstenandruckfedern (3;4) aufnehmenden Absatz mit einer tangentialen Bürstenandruckfläche (5.1;6.1) einer radialen Bürstenfixierungsfläche (5.2;6.2) auf.

5. Bürstenhalteranordnung nach zumindest einem der Ansprüche 1-4 mit dem Merkmal:
i) Die Bürstenkästen (2.1;2.2) bzw. die Bürsten (5;6) sind im Sinne einer vergrößerten Bürstenlänge in Andruckrichtung gekrümmt.

6. Bürstenhalteranordnung nach Anspruch 5 mit dem Merkmal:
j) Die Bürstenkästen (2.1;2.2) bzw. die Bürsten (5;6) sind teilkreisförmig gekrümmt.

7. Bürstenhalteranordnung nach zumindest einem der Ansprüche 1-6 mit dem Merkmal:
k) Zwischen der Bürstenandruckfläche (5.1;6.1) einerseits und dem jeweils auf dieser aufliegenden freien Andruckschenkel (3.1;4.1) andererseits ist jeweils eine vorzugsweise durch entsprechende Flächenkrümmung punktförmige Andruckkraftübertragung exzentrisch zur Bürsten-Symmetrielangsrichtung im Sinne einer unabhängig von der Drehrichtung des Kommutators (7) konstanten Schrägstellung der Bürsten (5;6) innerhalb ihrer Spielführung in den Bürstenkästen (2.1;2.2) vorgesehen.

8. Bürstenhalteranordnung nach zumindest einem der Ansprüche 1-7 mit dem Merkmal:
l) Die Bürstenplatte (2) ist mit Entstördrossel-Aufnahmetaschen (8) und/oder Thermowachter-Aufnahmetaschen (9) versehen.

9. Bürstenhalteranordnung nach zumindest einem der Ansprüche 1-8 mit dem Merkmal:
m) die Bürstenplatte (2) bzw. die Bürstenkästen (2.1;2.2) bzw. die Bürstenandruckfeder-Aufnahmen (2.3;2.4) bzw. die Fixierungslaschen (2.5;2.6) bzw. die Fixierungsnasen (2.7;2.8) bzw. die Anschlagzungen (2.51;2.61) bzw. die Entstördrossel-Aufnahmetaschen (8) bzw. die Thermowächter (9) sind Teile eines, insbesondere nur mit axial ziehbaren Formwerkzeugen herstellbaren, Kunststoff-Spritzgußteils.

## Claims

1. Brush holder arrangement for a commutator motor having the features:
a) A brush plate (2) is provided with brush boxes (2.1; 2.2) which are open to one axial end in the sense of an axial brush plug-in mounting;
b) The brush plate (2) is provided with brush contact-pressure spring holders (2.3; 2.4), which project axially in the same direction in the sense of a brush contact-pressure spring plug-on mounting holder;
c) spring clips which act as brush contact-pressure springs (3; 4), in each case have one free contact-pressure limb (3.1; 4.1) which, in operation, rests radially on the brushes (5; 6) in the sense of a contact pressure which is directed at an oblique angle to the commutator (7);
d) the brush plate (2) is provided with at least one, in each case radially projecting, fixing lug (2.5; 2.6) whose free end can be gripped, during installation of a brush contact-pressure spring (3; 4) by the contact-pressure limbs (3.1; 4.1) of said brush contact-pressure spring (3; 4), in such a manner that said contact-pressure limb (3.1; 4.1) comes to rest against the fixing lug (2.5; 2.6), in operation, in the sense of an axial securing stop in the direction opposite to installation.

2. Brush holder arrangement according to Claim 1 having the feature:
f) The brush plate (2) is provided with at least one, in each case radially projecting, fixing lug (2.7; 2.8) behind which the brush contact-pressure springs (3; 4) can be inserted, in each case by means of a free supporting limb (3.2; 4.2), in the sense of an axial position securing device or anti-rotation securing device when said springs (3, 4) reach their final plug-on mounting position.

3. Brush holder arrangement according to at least one of Claims 1 or 2 having the feature:
g) the brush plate (2) is provided with at least one, in each case radially projecting, stop tongue (2.51; 2.61) against which in each case one free contact-pressure limb (3.1; 4.1) is stopped, such that movement is constrained, before a contact position with the commutator (7).

4. Brush holder arrangement according to at least one of Claims 1-3, having the feature:
h) The brushes (5; 6) have in their end region which faces radially away from the commutator (7) a shoulder which is in the form of a step, accommodates the free contact-pressure limbs (3.1; 4.1) of the brush contact-pressure springs (3; 4) and has a tangential brush contact-pressure surface (5.1; 6.1) and a radial brush fixing surface (5.2; 6.2).

5. Brush holder arrangement according to at least one of Claims 1-4, having the feature:
i) The brush boxes (1.2; 2.2) and the brushes (5; 6) are curved in the sense of increased brush length in the contact-pressure direction.

6. Brush holder device according to Claim 5, having the feature:
j) The brush boxes (2.1; 2.2) and the brushes (5; 6) are curved in the form of part of a circle.

7. Brush holder arrangement according to at least of Claims 1-6 having the feature:
k) Contact-pressure force transmission, which is preferably in the form of a point as a result of appropriate surface curvature, is provided between the brush contact-pressure surface (5.1; 6.1) on the one hand and that free contact-pressure limb (3.1; 4.1) which in each case rests on said brush contact-pressure surface (5.1; 6.1) on the other, eccentrically with respect to the brush longitudinal direction of symmetry, in the sense of oblique positioning of the brushes (5; 6), which oblique position is constant irrespective of the rotation direction of the commutator (7), within the clearance of the said brushes (5, 6) in the brush boxes (2.1; 2.2).

8. Brush holder arrangement according to at least one of Claims 1-7 having the feature:
l) The brush plate (2) is provided with suppression inductor retaining pockets (8) and/or thermal monitor retaining pockets (9).

9. Brush holder arrangement according to at least one of Claims 1-8 having the feature:
m) The brush plate (2) and the brush boxes (2.1; 2.2) as well as the brush contact-spring holders (2.3; 2.4) and the fixing lugs (2.5; 2.6) as well as the fixing tabs (2.7; 2.8) and the stop tongues (2.51; 2.61) as well as the suppression inductor holder pockets (8) and the thermal monitors (9) are parts of an injection-moulded plastic part which can preferably be produced only using moulding tools which can be drawn axially.

## Revendications

1. Dispositif porte-balai pour un moteur à collecteur ayant les caractéristiques suivantes :
a) un plateau (2) pour balai est muni de cages (2.1 ; 2.2) de porte-balai ouvertes vers une face frontale axiale en vue d'un montage par enfichage, suivant l'axe, d'un balai ;
b) le plateau (2) pour balai est muni de récepteurs (2.3 ; 2.4) de ressort de pression de balai saillant axialement en vue d'une fixation, dans le même sens suivant l'axe, par embrochage d'un ressort de pression de balai ;
c) des ressorts hélicoïdaux de torsion sont appliqués en fonctionnement en tant que ressorts (3 ; 4) de pression de balai radialement aux balais (5 ; 6) par une branche libre (3.1 ; 4.1) de pression en vue d'une pression dirigée en biais vers le collecteur (7) ;
d) le plateau (2) pour balai est muni d'au moins une patte (2.5 ; 2.6) d'immobilisation saillante radialement, la branche (3.1 ; 4.1) de pression d'un ressort (3 ; 4) de pression de balai pouvant chevaucher, lors du montage de ce ressort de pression de balai, l'extrémité libre de la patte de telle sorte que cette branche vienne s'appliquer en fonctionnement à la patte (2.5 ; 2.6) d'immobilisation en vue d'un blocage axial par butée dans le sens de montage antagoniste.

2. Dispositif porte-balai suivant la revendication 1 ayant la caractéristique :
f) le plateau (2) pour balai est muni d'au moins un bec (2.7 ; 2.8) d'immobilisation saillant radialement, derrière lequel les ressorts (3 ; 4) de pression de balai peuvent être enfichés, chacun par une branche libre (3.2; 4.2) d'appui en vue d'un blocage axial en position ou en rotation lorsqu'ils atteignent leur position d'extrémité de montage par embrochage.

3. Dispositif porte-balai suivant au moins l'une des revendications 1 ou 2 ayant la caractéristique :
g) le plateau (2) pour balai est muni d'au moins une languette (2.51 ; 2.61) de butée saillante radialement, contre laquelle une branche libre (3.1 ; 4.1) de pression bute en empêchant le mouvement, avant une position de contact avec le collecteur (7).

4. Dispositif porte-balai suivant au moins l'une des revendications 1 à 3 ayant la caractéristique :
h) les balais (5 ; 6) comportent à leur zone d'extrémité éloignée radialement du collecteur (7) un retrait étagé recevant les branches libres (3.1 ; 4.1) de pression des ressorts (3 ; 4) de pression de balai et comportant une surface (5.1; 6.1) tangentielle de pression de balai et une surface (5.2 ; 6.2) radiale d'immobilisation de balai.

5. Dispositif porte-balai suivant au moins l'une des revendications 1 à 4 ayant la caractéristique :
i) les cages (2.1 ; 2.2) de porte-balai et les balais (5 ; 6) sont courbés de sorte à avoir une longueur de balai agrandie dans la direction de pression.

6. Dispositif porte-balai suivant la revendication 5 ayant la caractéristique :
j) les cages (2.1 ; 2.2) de porte-balai et les balais (5 ; 6) sont courbés en arc de cercle.

7. Dispositif porte-balai suivant au moins l'une des revendications 1 à 6 ayant la caractéristique :
k) il est prévu entre la surface (5.1 ; 6.1) de pression de balai d'une part, et la branche (3.1 ; 4.1) libre s'appliquant respectivement à cette surface d'autre part, une transmission de force de pression ponctuelle, de préférence par une courbure correspondante de surface, et excentrée par rapport à la direction longitudinale de symétrie des balais en vue d'une position oblique des balais (5 ;6) constante indépendamment du sens de rotation du collecteur (7) à l'intérieur de leur guide dans les cages (2.1 ; 2.2) de porte-balai.

8. Dispositif porte-balai suivant au moins l'une des revendications 1 à 7, ayant la caractéristique :
l) le plateau (2) pour balai est muni de poche (8) de réception de self antiparasites et/ou de poche (9) de réception d'un appareil contrôleur de température.

9. Dispositif porte-balai suivant au moins l'une des revendications 1 à 8, ayant la caractéristique :
m) le plateau (2) pour balai, les cages (2.1 ; 2.2) de porte-balai, les récepteurs (2.3 ; 2.4) de ressort de pression de balai, les languettes (2.5 ; 2.6) d'immobilisation, les becs (2.7 ; 2.8) d'immobilisation, les languettes (2.51 ; 2.61) de butée, les poches (8) de réception de self antiparasites et l'appareil (9) contrôleur de température font partie d'une pièce moulée par injection de matière plastique pouvant être fabriquée notamment seulement à l'aide d'outils de formage ductiles axialement.
